# FASCICULE DE BREVET EUROPEEN

(11) **EP 1 080 038 B1**
(45) Date de publication et mention de la délivrance du brevet: **26.02.2003**
(21) Numéro de dépôt: 99916990.7
(22) Date de dépôt: 05.05.1999
(51) Int. Cl.: C01C 3/02, A01M 13/00, A01M 17/00

(54) **GENERATEUR ET PROCEDE POUR LA PRODUCTION D'ACIDE CYANYDRIQUE GAZEUX**
VORRICHTUNG UND VERFAHREN ZUR HERSTELLUNG VON GASFÖRMIGER BLAUSÄURE
GENERATOR AND METHOD FOR PRODUCING GASEOUS HYDROCYANIC ACID

(30) Priorité: 07.05.1998 FR 9805988
(43) Date de publication de la demande: 07.03.2001
(73) Titulaire: Schmidt, Alex, 67000 Strasbourg (FR)
(72) Inventeur: Schmidt, Alex, 67000 Strasbourg (FR)
(86) Numéro de dépôt international: FR9901061
(87) Numéro de publication internationale: WO99057060

(56) Documents cités:
- EP-A- 0 713 644
- BE-A- 427 628
- US-A- 2 004 332
- US-A- 2 178 372

## Description

La présente invention est relative à un procédé de génération d'un gaz toxique de fumigation utilisable dans des conditions définies par la loi pour des opérations de lutte antiparasitaire.

Il s'agit d'un procédé de production d'acide cyanhydrique HCN, utilisable par exemple pour la désinsectisation d'une serre, d'un moulin, d'une usine, d'un moyen de transport (tel que camion, wagon, bateau, avion) ainsi que pour la dératisation de ces locaux et dont l'originalité et la nouveauté résident dans le fait que le réactif chimique dangereux, un sel de cyanure, se trouve isolé par un produit de maintien pour accroître la sécurité au transport et au stockage et que la succession de réactions chimiques qui a lieu au moment de la mise en oeuvre du dispositif selon le procédé de l'invention se termine par un traitement automatique des résidus pour les rendre inoffensifs.

Le gaz HCN ou acide cyanhydrique est extrêmement toxique pour l'homme et son action mortelle, à des doses de l'ordre de quelques grammes par mètre cube, est fulgurante. Le sel de cyanure présent dans le générateur avant emploi est également un des poisons les plus violents qui soient : quelques grammes ingérés par accident suffisent à provoquer, chez l'homme, une mort presque immédiate.

Le lecteur pourra se demander pourquoi prendre alors le risque d'utiliser un produit aussi dangereux. C'est que le gaz HCN en tant qu'insecticide ou raticide peut rendre d'immenses services. Le législateur lui-même en convient puisqu'en France un arrêté définit les conditions dans lesquelles son utilisation est autorisée (une telle autorisation d'emploi réglementé existe dans de nombreux autres pays).

Par exemple, le gaz HCN est d'une efficacité remarquable en horticulture pour combattre à faible dose, au cours de traitements nocturnes, certains parasites (comme les Aleurodes ou les Aphidés); non seulement les plantes résistent fort bien aux faibles doses utilisées, mais encore les résidus de gaz dans les serres au lendemain du traitement sont si faibles qu'ils sont absolument sans danger - toutes les mesures de concentrations le montrent - pour les personnels de l'entreprise horticole.

Même après des traitements à très forte dose dans des usines par exemple (la loi autorise en France jusqu'à vingt grammes d'acide cyanhydrique par mètre cube) les résidus de gaz HCN, moyennant une aération convenable, sont absolument sans danger pour les personnels qui reprennent le travail après le traitement.

La nature supporte aisément la présence constante dans l'atmosphère autour de la Terre d'environ vingt-cinq millions de tonnes de gaz HCN, sans effet de serre et à des concentrations remarquablement inférieures à celles qui sont bien tolérées par les êtres vivants. Comme la durée de vie de ces molécules HCN dans l'atmosphère est de l'ordre de quatre ans, pendant lesquels elles peuvent parcourir de grandes distances, les apports en cyanure gazeux sont de l'ordre de six millions de tonnes par an, toutes sources naturelles et artificielles confondues. Ce sont des apports en face desquels les quantités de gaz HCN utilisées pour la désinsectisation promettent d'être négligeables. La durée de vie des molécules HCN dans d'autres milieux comme l'eau ou le sol est encore plus réduite.

Enfin, à l'heure actuelle, le fumigant sans doute le plus utilisé dans le monde, le bromure de méthyle CH3Br, est critiqué pour son action néfaste sur la couche d'ozone et son usage va être prochainement limité : le gaz HCN est en mesure de le remplacer dans bien des cas, pourvu que l'on dispose de générateurs adéquats.

Ainsi une molécule à priori très dangereuse peut-elle, dans le cadre d'une utilisation judicieuse, s'avérer sans danger pour les personnes et aussi pour l'environnement.

Il est par contre vital que des dispositifs de sécurité inhérents à la structure des générateurs utilisés mettent à l'abri les personnes, et notamment les opérateurs chargés de les mettre en oeuvre, du gaz HCN ainsi que du sel de cyanure présent à l'état solide dans les générateurs avant emploi.

Le gaz HCN est généré par mise en contact dans un générateur qui peut être un récipient en métal ou en matière plastique d'un volume convenable, de deux produits chimiques : un sel de cyanure (solide) en granulés et un acide (fluide). D'autres produits chimiques entrent en jeu, selon les caractéristiques essentielles de la présente invention, dans le but d'améliorer le fonctionnement des générateurs et notamment de réaliser un traitement automatique des résidus.

Un générateur d'acide cyanhydrique gazeux HCN avait fait le 24.11.1994 l'objet d'une demande de brevet français sous le n° 94 14323. Les procédés et les dispositifs décrits dans la demande de brevet n° 94 14323 , selon leurs caractéristiques essentielles, assuraient avant tout la sécurité des opérateurs lors de la mise en oeuvre des générateurs, d'une part par l'obtention d'un retard dans le début de la réaction chimique en contrôlant l'arrivée du réactif chimique fluide et d'autre part par l'obtention d'une alarme sonore (qui signalait le début de la réaction), en contrôlant l'échappement du gaz. Ces dispositions concernaient la partie supérieure du générateur.

Dans la présente demande de brevet, les procédés et les dispositifs essentiels permettent d'une part d'augmenter la sécurité pendant le transport et le stockage des générateurs et d'autre part de garantir le déroulement dans le bon ordre des réactions chimiques qui s'achèvent par le traitement automatique des résidus dispensant les opérateurs de la tâche d'éliminer les résidus. Ces avantages sont obtenus par une nouvelle configuration en étages superposés des réactifs chimiques solides dans le fond du générateur. Les dispositions essentielles de la présente demande de brevet concernent donc la partie inférieure du générateur.

Les caractéristiques de la demande de brevet n° 94 14323 ne sont pas reprises ici et un dispositif plus simple d'arrivée des fluides est proposé.

Mais il est certain qu'un générateur qui rassemblerait les avantages de l'une et de l'autre demandes de brevet serait la meilleure solution : c'est ainsi que le dispositif décrit dans l'actuelle demande de brevet constitue un perfectionnement du générateur décrit dans la demande de brevet n° 94 14323, qui présentait deux défauts.

Un premier défaut venait du fait que le réactif chimique solide, du cyanure de sodium, se trouvait à l'état de granulat à l'intérieur de la boîte dans laquelle il était transporté et stocké, par doses de quarante grammes. A l'ouverture de la boîte, le produit se trouvait à l'air libre et pouvait constituer un grand danger pour la personne qui l'aurait ingéré accidentellement. Il y avait aussi le risque d'une émission de gaz HCN si, dans des conditions accidentelles, notamment pendant le transport, un acide était venu en contact avec le sel de cyanure.

Un second défaut venait du fait que les résidus devaient être traités (car ils contenaient un excès d'acide et un peu de cyanure en solution) et éliminés par les opérateurs : cette manipulation était sans grand danger, mais fastidieuse, et le risque existait que les opérateurs soient tentés de se débarrasser des résidus sans les avoir traités.

La présente invention a donc pour but de remédier à ces deux défauts en proposant une nouvelle configuration en étages superposés des réactifs chimiques solides dans le fond du générateur, de manière d'une part à isoler le sel de cyanure pour plus de sécurité et d'autre part à réaliser un traitement automatique des résidus.

Cette disposition des réactifs chimiques solides dans le fond du générateur est donc essentielle pour l'invention et se trouve réalisée par la fabrication d'étages successifs et superposés au fond du générateur.

Ces étages superposés sont constitués par un amalgame réalisé entre chacun des réactifs chimiques solides et une matière inerte ou produit de maintien. L'ensemble de ces étages, au nombre de trois au moins, forme un empilement compact, rigide aux températures rencontrées pendant le transport et le stockage et dont les différentes couches adhèrent fortement entre elles ainsi qu'aux parois et au fond du générateur.

Cette présentation réalisée par le mélange des réactifs chimiques solides avec le produit de maintien a d'abord pour résultat de rendre le sel de cyanure impossible à ingérer accidentellement par les personnes de le mettre à l'abri de l'arrivée accidentelle d'un réactif chimique acide susceptible de réagir avec lui en générant le gaz HCN. L'autre avantage de cette présentation est de maintenir les réactifs chimiques solides à leur place respective et d'assurer ainsi le déroulement dans le bon ordre, lors de la mise en oeuvre des réactions successives de production du gaz HCN puis de traitement automatique des résidus par leur neutralisation et par l'élimination des éléments toxiques qu'ils contiennent.

Pour donner toute satisfaction, le produit de maintien employé pour la confection des étages doit remplir un certain nombre de conditions : inattaquable par les acides et insoluble dans l'eau, il ne doit pas réagir avec les réactifs chimiques mélangés à lui dans le cadre du présent dispositif. Dur et adhérent aux parois du générateur aux températures ordinaires, il doit pouvoir être liquéfié ou solubilisé au moment de la mise en oeuvre du générateur, de manière à permettre la mise en contact des réactifs chimiques solides présents dans le fond du générateur avec les réactifs chimiques liquides introduits par les opérateurs. Le produit de maintien peut être une résine naturelle ou artificielle, une matière plastique ou tout autre produit susceptible de ne pas réagir avec les réactifs chimiques nécessaires au fonctionnement du générateur, d'être solide aux températures rencontrées pendant le transport et le stockage et d'être soit rendu liquide par la chaleur soit mis en solution par un solvant.

Dans un exemple préféré mais non exclusif de réalisation du dispositif pour la mise en oeuvre de la présente invention, le produit de maintien est constitué de paraffine. Outre le sel de cyanure destiné à la production du gaz HCN, deux autres réactifs chimiques solides entrent dans la composition du générateur : un produit alcalin en granulés et un produit oxydant en granulés. Ces deux derniers réactifs chimiques solides sont destinés au traitement automatique des résidus.

Les étages superposés garnissant le fond du générateur sont constitués de la manière suivante :

De haut en bas, nous rencontrons successivement :
- l'étage 1, qui est formé de paraffine pure;
- l'étage 2, qui est formé d'un mélange de sel de cyanure en granulés et de paraffine;
- l'étage 3, qui est formé d'un mélange de produit alcalin en granulés et de paraffine;
- l'étage 4, tout au fond du générateur, qui est formé d'un mélange de produit oxydant en granulés et de paraffine;

De cette manière, dans l'étage 2 qui constitue un bloc compact et rigide aux températures rencontrées habituellement pendant le transport et le stockage, le sel de cyanure dont chaque grain est enrobé de paraffine est rendu impossible à ingérer accidentellement par les personnes et se trouve mis à l'abri de l'arrivée accidentelle d'un réactif chimique acide susceptible de réagir avec lui en générant le gaz HCN, puisque ledit réactif chimique acide n'attaque pas la paraffine.

La paraffine constitue à elle seule l'étage 1 superposé aux étages 2 et 3 et dont la fonction est de renforcer l'isolement du sel de cyanure contenu dans l'étage 2 sous-jacent et d'introduire au moment de la mise en oeuvre un délai dans le début de la réaction de production du gaz HCN, de sorte que les opérateurs aient le temps de quitter le local de traitement avant l'arrivée du gaz HCN.

Les générateurs ainsi garnis de leur superposition d'étages sont emballés à raison de plusieurs unités dans de forts cartons étiquetés et transportés dans de conditions réglementaires.

Le réactif chimique acide qui doit réagir avec le sel de cyanure et les autres réactifs chimiques solides est un acide fort concentré, contenu dans des bouteilles de préférence en matière plastique emballées à raison du même nombre d'unités dans de forts cartons étiquetés, transportés stockés séparément des cartons de générateurs pour supprimer tout risque de contact de l'acide avec le cyanure pendant le transport et le stockage.

La mise en oeuvre du générateur et l'enchaînement des différentes réactions se déroulent de la manière décrite ci-après.

Après avoir déballé le nombre exact de générateurs nécessaires pour le gazage envisagé ainsi qu'un nombre équivalent de bouteilles d'acide, les opérateurs commencent par retirer les couvercles de transport étanches des générateurs puis introduisent dans ceux-ci la quantité nécessaire d'eau H2O qui est le deuxième réactif chimique liquide. A l'aide de leurs couvercles d'application, qui comprennent des perforations, les générateurs sont ensuite refermés puis disposés dans les locaux à traiter selon le plan de gazage élaboré par les opérateurs. Les bouteilles d'acide sont installées à l'emplacement prévu sur les couvercles d'application et ouvertes à leur partie supérieure par dévissage du bouchon, pour constituer une prise d'air. Tout est prêt pour le lancement du traitement.

La mise en oeuvre des générateurs débute par un seul geste : l'ouverture du robinet d'écoulement situé sur un coude d'écoulement à la partie inférieure de la bouteille d'acide, qui provoque le début de l'écoulement de l'acide dans l'eau qui se trouve à l'intérieur du générateur. La vitesse d'écoulement de l'acide est fonction du débit du robinet.

L'enchaînement de réactions qui fait suite à l'ouverture du robinet est totalement automatique et inéluctable. L'arrivée de l'acide dans l'eau provoque une élévation de température qui est suffisante pour faire fondre d'abord la paraffine de l'étage 1. Le temps que met le mélange chaud d'acide et d'eau à faire fondre la paraffine de l'étage 1 est fonction de la vitesse d'arrivée de l'acide dans l'eau et de l'épaisseur de l'étage 1 et représente le délai de sécurité que les opérateurs mettront à profit pour quitter le local de traitement avant l'arrivée du gaz HCN.

Lorsque le mélange chaud d'acide et d'eau commence à faire fondre la paraffine de l'étage 2, l'acide est mis en présence des grains de sel de cyanure et la réaction de production du gaz HCN débute. A la fin de cette réaction, la presque totalité du gaz HCN est disponible dans le local de traitement pour la lutte antiparasitaire par fumigation.

La réaction entre l'acide et le sel de cyanure est vive et exothermique : ce nouvel apport de chaleur permet d'entretenir et de terminer la fonte de la paraffine de l'étage 2, après quoi c'est la paraffine de l'étage 3 qui commence à fondre.

A la fin de cette première réaction de production du gaz HCN, il reste dans les résidus liquides du cyanure sous forme d'acide cyanhydrique HCN dissous.

La réaction suivante, qui débute lorsque l'acide en excès après la première réaction commence à être mis en présence des grains de produit alcalin par la fonte de la paraffine de l'étage 3 a deux fonctions : d'une part, la neutralisation de l'acide en excès, d'autre part l'élimination de l'acide cyanhydrique en solution dans les résidus par entraînement dans l'atmosphère sous forme gazeuse.

Un certain excès d'acide est nécessaire au bon déroulement de la première réaction avec le sel de cyanure. C'est pour prolonger la durée de la deuxième réaction avec le produit alcalin que cet excès d'acide est largement supérieur à celui qui serait nécessaire au bon déroulement de la première réaction de production du gaz HCN.

En effet, la réaction entre l'acide et le réactif chimique alcalin produit une grande quantité de gaz comme le gaz carbonique CO2, l'azote N2 ou la vapeur d'eau, selon les réactifs chimiques mis en oeuvre, qui agite les résidus liquides et chauds d'un fort bouillonnement qui peut durer plusieurs minutes et qui est capable d'entraîner dans l'atmosphère, sous forme gazeuse, la majeure partie de l'acide cyanhydrique HCN en solution dans les résidus.

De cette manière, le gaz HCN en provenance des résidus (environ 5 % du total) rejoint la matière active dans le local à traiter mais surtout, le problème posé par la toxicité des résidus est fortement diminué, puisque selon les quantités de réactifs chimiques mis en oeuvre, entre 90 % et 99,9 % du cyanure qu'ils contenaient en solution a été dirigé vers l'atmosphère du local à traiter.

La réaction entre l'acide et le produit alcalin est également exothermique : cet apport de chaleur facilite l'entraînement de l'acide cyanhydrique HCN dissous et permet d'entretenir et de terminer la fonte de la paraffine de l'étage 3 puis de faire fondre la paraffine de l'étage 4. A ce moment-là, la neutralisation de l'excès d'acide est achevée, et c'est un léger excès de produit alcalin qui donné aux résidus un pH de l'ordre de 8.

La dernière réaction, avec la libération par la fonte de la paraffine de l'étage 4 d'une petite quantité de réactif chimique oxydant, peut ensuite avoir lieu entre cet oxydant et la très faible quantité d'acide cyanhydrique HCN encore en solution dans les résidus. La quantité de réactif chimique oxydant est faible, mais néanmoins très supérieure à la quantité de cyanure et la réaction se solde par la disparition totale du cyanure résiduel. Les résidus, avec un pH légèrement basique et une absence presque totale de toxicité, refroidissent : la paraffine qui surnage se solidifie en surface et le devenir des résidus sous-jacents dépend de la quantité d'eau au départ.

Avec une faible quantité d'eau au départ, précisément déterminée et mesurée, on assiste à leur cristallisation. L'ensemble des résidus se fige alors en un bloc rigide dans le fond du générateur et il existe deux possibilités pour leur élimination : soit le tout est dirigé vers une usine d'incinération ou d'élimination de déchets, soit les générateurs usagés (transportables puisque sans phase liquide ni toxicité) reviennent vers le fabricant qui peut alors refondre la paraffine pour la réutiliser et redissoudre le reste pour le verser à l'égout. Cette solution, qui convient pour les générateurs de petite taille, permet au fabricant de recycler l'ensemble du matériel : générateurs et leurs couvercles, bouteilles pour l'acide, emballages, ainsi que la paraffine.

Avec une plus grande quantité d'eau au départ, par exemple deux fois plus grande en proportion que dans le cas ci-dessus, la paraffine durcit au refroidissement mais les autres résidus restent liquides. Cette manière convient pour les gros et très gros générateurs. Dans ce cas le fabricant éliminera lui-même sur place les résidus liquides et emportera le reste pour le recycler : générateurs, récipients pour l'acide, paraffine.

Dans le cas où le fabricant procède lui-même à l'élimination des résidus des générateurs usagés, la présence de l'étage 4 qui fournit un oxydant en fin de réaction peut être superflue, car la réaction de neutralisation de l'acide par le produit alcalin entraîne dans l'atmosphère la presque totalité du cyanure résiduel. Ce qui reste de cyanure en solution peut aisément être décomposé, au moment de l'élimination des résidus par le fabricant, par l'ajout d'un peu d'eau de Javel ou d'un autre oxydant. C'est la solution qui sera retenue dans l'exemple de réalisation qui va suivre.

Il s'agit dans cet exemple de petits générateurs destinés à la désinsectisation des serres. Mais des générateurs de tailles très différentes peuvent fonctionner selon les caractéristiques de l'invention, avec les résultats essentiels pour l'invention. Par exemple on réalise aisément des générateurs beaucoup plus grands : c'est toute une gamme de générateurs allant d'une production de quelques grammes à plusieurs kilogrammes de gaz HCN qui peuvent être fabriqués avec toutes les caractéristiques de présentation et de fonctionnement essentielles de l'invention.

Une forme particulière de réalisation et de fonctionnement du dispositif selon l'invention est décrite ci-dessous en relation avec les dessins dans lesquels :

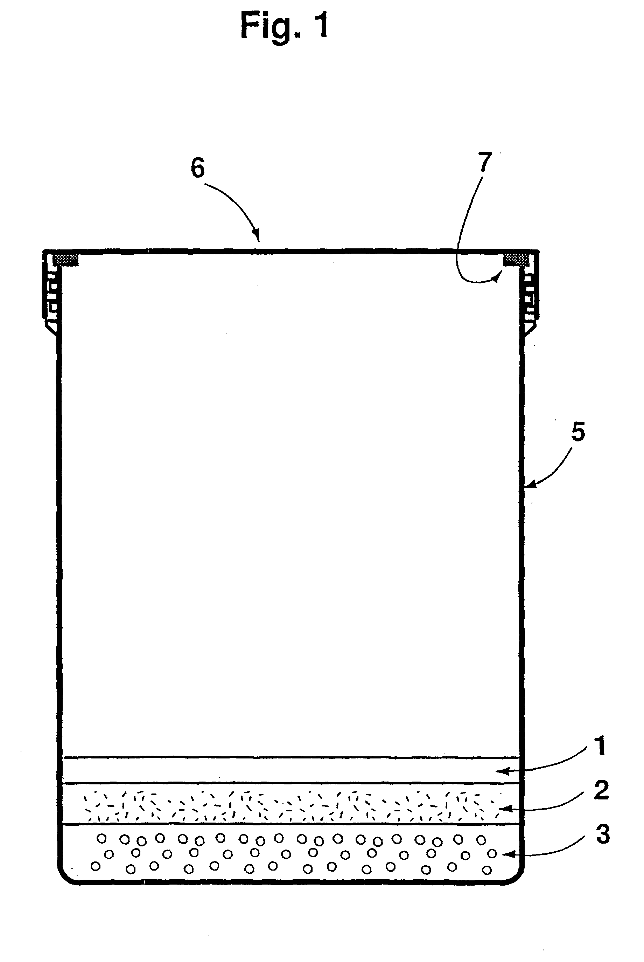

- la figure 1 est une vue en élévation du générateur en configuration de transport et de stockage, avec ses trois étages de produits solides et son couvercle étanche à vis;

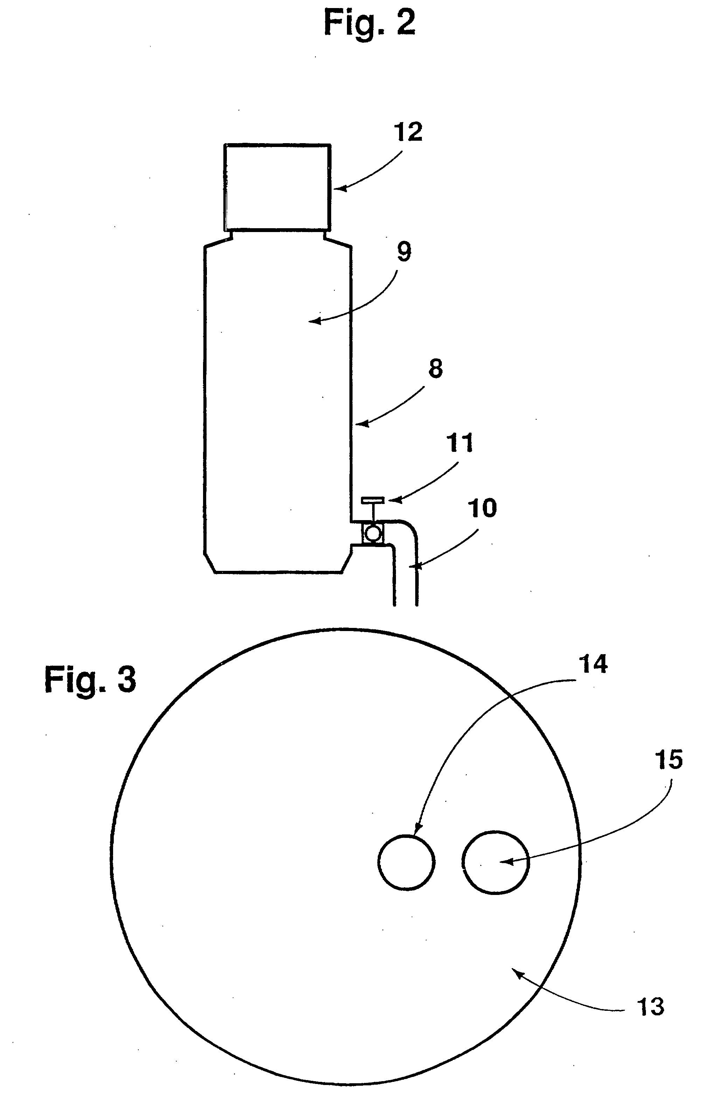

- la figure 2 est une vue en élévation du contenant renfermant l'acide muni de son bouchon de transport et de stockage;
- la figure 3 est une vue de dessus du couvercle perforé en vue de l'installation du contenant représenté sur la figure 2;

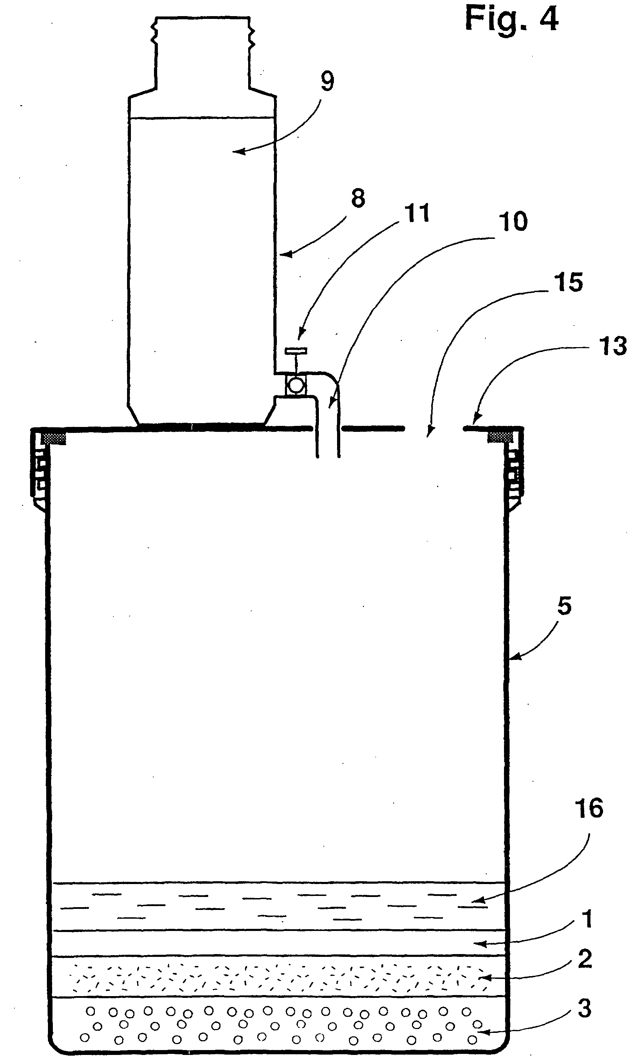

- la figure 4 est une vue en élévation en position d'utilisation du dispositif de mise en oeuvre du procédé selon l'invention, comportant un générateur chimique avec ses étages de produits solides, son appoint d'eau, son couvercle perforé sur lequel est monté un contenant renfermant l'acide;
- la figure 5 est une vue en élévation du générateur après usage, avec au fond les couches de résidus solidifiés, avec le couvercle étanche à vis et renfermant le contenant vidé de son réactif chimique liquide, le tout prêt pour la voyage de retour.

La forme particulière et non limitative de réalisation du générateur de fumigation pour la mise en oeuvre de l'invention décrite ci-après comprend un générateur chimique 5 d'une contenance de un litre, en métal, en matière plastique ou en toute autre matière résistant à la chaleur (100°C) et aux acides. Au fond du générateur 5 sont disposés à l'avance les réactifs chimiques solides nécessaires au fonctionnement du générateur et qui constituent trois étages superposés : les étages 1, 2 et 3.

Dans cet exemple non limitatif les réactifs chimiques utilisés sont les suivants : le sel de cyanure contenu dans l'étage 2 est du cyanure de sodium NaCN en granulés ; le produit alcalin contenu dans l'étage 3 est du carbonate de sodium Na2CO3 en granulés ; le premier réactif chimique liquide 9 est de l'acide sulfurique concentré H2SO4 ; le deuxième réactif chimique liquide 16 est de l'eau H2O ; le produit de maintien est de la paraffine à haute température de fusion (63°C) pour les étages 1 et 2 et de la paraffine à basse température de fusion (51°C) pour l'étage 3.

L'étage 1 est constitué de 25 g de paraffine pure à haute température de fusion (63 °C).

L'étage 2 est constitué du mélange de 42,5 g de cyanure de sodium en granulés et de
25 g de paraffine à haute température de fusion (63 °C).

L'étage 3 est constitué du mélange de 80 g de carbonate de sodium en granulés et de 50 g de paraffine à basse température de fusion (51 °C).

Pour la fabrication d'un générateur à étages, chaque étage est réalisé à part. Les réactifs chimiques solides entrant dans la composition de chaque étage sont mélangés à chaud avec la paraffine liquide puis versés dans le fond du générateur où on laisse le mélange durcir par refroidissement. Ce n'est qu'après refroidissement et durcissement d'un étage que l'on coule l'étage suivant, pour éviter une interpénétration ou un mélange des différents réactifs chimiques solides qui doivent rester bien séparés jusqu'au moment de la mise en oeuvre des générateurs.

L'étage 3 est donc coulé en premier, puis durci par refroidissement.

Puis vient le tour de l'étage 2 et de l'étage 1 en une seule et même coulée : aux 42,5 g de cyanure de sodium en granulés on ajoute directement 25 + 25 = 50g de paraffine à haute température de fusion et on mélange à chaud avant de verser le mélange chaud et liquide sur l'étage 3 déjà durci. Le cyanure de sodium en granulés, plus lourd que la paraffine, constitue en mélange avec cette dernière l'étage 2 juste au-dessus de l'étage 3. La paraffine en excès surnage, pure, et constitue à elle seule l'étage supérieur 1. Pour ces deux étages (1 et 2) dans lesquels le rôle que joue la paraffine dans l'isolement du cyanure de sodium est primordial du point de vue de la sécurité pendant le transport et le stockage, on utilise une paraffine à haute température de fusion (63 °C), très dure aux températures rencontrées pendant le transport et le stockage.

Les étages adhèrent fortement les uns aux autres, par fonte superficielle de l'étage précédent au moment de la coulée du suivant et forment un bloc compact et rigide à température ordinaire, adhérant fortement aux parois et au fond du générateur, quelle que soit la matière dont celui-ci est formé : métal, matière plastique ou autre.

Le dispositif est complété par un contenant 8 du type bouteille, flacon ou similaire en matière plastique par exemple, renfermant l'acide sulfurique concentré 9 et équipé d'un coude d'écoulement 10 muni d'un robinet 11. Pour le transport et le stockage, ce contenant est obturé par un bouchon étanche à vis 12. Dans le cas de l'exemple non limitatif décrit ici, la quantité d'acide sulfurique concentré renfermée dans le contenant 8 est de 60 ml.

L'installation du générateur de fumigant conforme à la présente invention débute par le retrait du couvercle 6 et l'ajout dans le générateur, par l'opérateur, d'une certaine quantité d'eau 16 qui, toujours selon l'exemple choisi, est de 140 ml; puis l'opérateur obture le générateur 5 à l'aide du couvercle perforé 13.

L'installation du générateur de fumigant se poursuit avec la mise en place au-dessus du générateur sur le couvercle perforé 13 d'un contenant 8 dont le coude d'écoulement 10 est engagé dans l'ouverture 14 et dont le robinet 11 est fermé. Enfin, le capuchon étanche 12 est retiré du contenant 8.

Le générateur est alors prêt à fonctionner et l'opérateur, accompagné d'un aide sous masque comme lui-même, procède à l'ouverture du robinet 11 sur tous les générateurs mis en oeuvre au cours du traitement et quitte le local de traitement.

L'acide sulfurique concentré 9, avec un débit réglé par le robinet 11, s'écoule dans l'eau 16 en une minute environ : le mélange de l'eau et de l'acide produit un échauffement considérable, portant le mélange à une température d'environ 85 °C, suffisante pour faire fondre la paraffine de l'étage 1.

Le temps que met le mélange d'acide et d'eau à traverser l'étage 1 dépend de la vitesse d'écoulement de l'acide à travers le coude d'écoulement 10 ainsi que de l'épaisseur de l'étage 1 et représente dans l'exemple décrit ici un délai d'environ deux minutes avant le début de la réaction de production du gaz HCN de sorte que les opérateurs aient le temps d'activer les autres générateurs et de sortir du local de traitement avant l'arrivée du gaz HCN.

Le mélange chaud d'acide sulfurique 9 et d'eau 16, après avoir fait fondre la paraffine de l'étage 1, commence à faire fondre la paraffine de l'étage 2. L'acide sulfurique 9 se trouve mis en contact des grains de cyanure de sodium de l'étage 2 et la réaction entre les deux réactifs chimiques débute pour générer l'acide cyanhydrique HCN gazeux. Cette réaction est vive (le bouillonnement qui a lieu occupe la moitié du volume intérieur du générateur) et dure environ deux minutes : elle est exothermique et la chaleur produite entretient la fonte de la paraffine jusqu'à libération et consommation complètes du cyanure de sodium.

La quantité de gaz HCN générée est de 22,5 g et ce gaz se propage rapidement dans toutes les directions pour se partager également dans tout le local à traiter. Cette mobilité caractéristique du gaz HCN permet d'installer les générateurs à de grandes distances l'un de l'autre et donc d'en réduire le nombre par exemple en à serre un générateur pour 500 m2 ou 2 000 m3.

A la fin de la réaction de production du gaz HCN, il y a dans la phase liquide au fond du générateur un excès de 68 g d'acide sulfurique et une quantité d'acide cyanhydrique HCN en solution de l'ordre de 1 g.

Au fur et à mesure que la paraffine de l'étage 3 fond à son tour, l'acide sulfurique est mis en contact avec les grains de carbonate de sodium dégagés de la paraffine et il s'ensuit une vive réaction (le bouillonnement qui a lieu occupe cette fois les trois quarts du volume intérieur du générateur) qui produit 32 g de gaz carbonique CO2 gazeux. Cette réaction qui dure 8 mn sans interruption crée les conditions d'un entraînement sous forme de gaz HCN vers l'atmosphère du local à traiter de 99 % au moins de l'acide cyanhydrique en solution dans les résidus. La durée de la réaction qui répartit l'apport de chaleur sur 8 mn a fait préférer, pour la confection de l'étage 3, une paraffine à basse température de fusion (51°C) de manière à faciliter la fonte de la paraffine pour garantir l'accomplissement du processus selon l'invention.

S'agissant du traitement automatique des résidus, il est possible mais difficile, moyennant des quantités de réactifs chimiques beaucoup plus importantes, de diminuer encore significativement les cyanures résiduels par la méthode d'entraînement décrite plus haut. Par contre, il peut être très intéressant de faire l'économie de grandes quantités de réactifs chimiques et de se contenter d'un entraînement plus limité des cyanures résiduels, 90 % par exemple, dans le cas des gros ou très gros générateurs dont les résidus sont ensuite traités sur place par le fabricant.

A la fin de la réaction entre le carbonate de sodium et l'excès d'acide sulfurique, celui-ci est entièrement neutralisé et le carbonate de sodium lui-même en excès de 7 g confère aux résidus un pH de l'ordre de 8. La quantité d'acide cyanhydriqueHCN résiduel a été réduite à moins de 10 mg.

Les traitements en serre se font le soir. En refroidissant au cours de la nuit qui suit le gazage, les résidus liquides au fond du générateur se figent : la paraffine forme la couche superficielle 17, dure à température ordinaire. Les autres résidus contiennent 160 g de sulfate de sodium Na2SO4 qui cristallise, du fait de la faible quantité d'eau initiale (140 ml). L'ensemble des résidus autres que la paraffine (eau, sulfate de sodium, traces de cyanure) forme ainsi, grâce à cette cristallisation, une couche inférieure 18 rigide et compacte tout au fond du générateur.

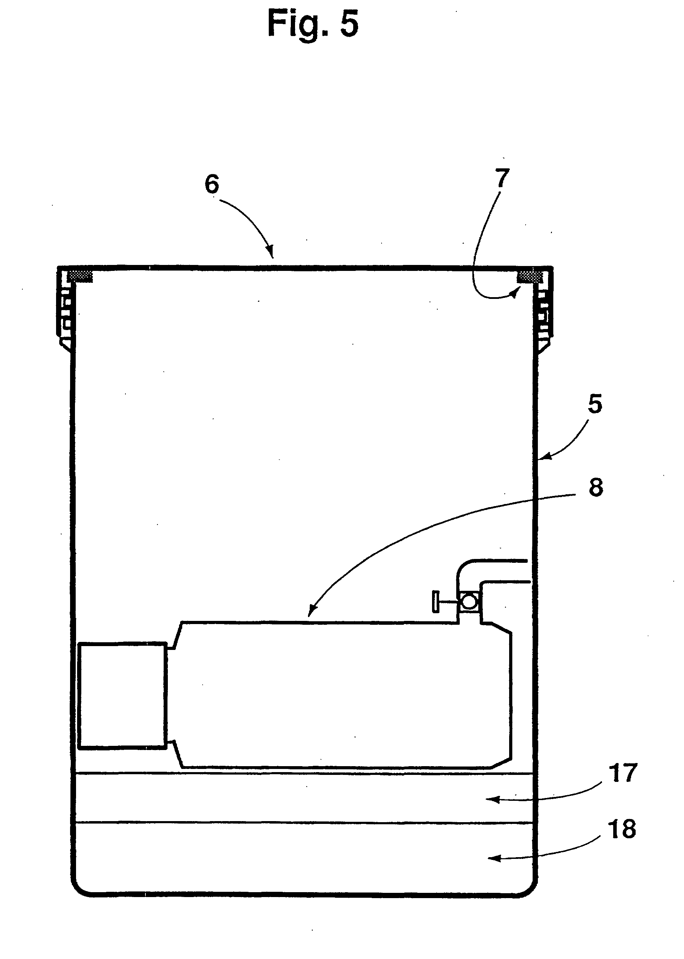

L'ensemble des deux couches 17 et 18 forme un bloc dur et fortement adhérent au fond du générateur, qui ne contient plus de matière dangereuse en quantité notable. Les générateurs usagés peuvent être renvoyés au fabricant dans leur emballage d'origine, refermés à l'aide de leurs couvercles étanches 6 et renfermant les contenants vides 8 (fig. 5).

Le fabricant procède alors à l'élimination des résidus dans les règles de l'art et recycle une grande partie du matériel (générateurs et leurs emballages, couvercles spéciaux, petites bouteilles, paraffine).

Les applications sont nombreuses : dans l'agriculture, en serre horticole ou maraîchère, on utilisera de préférence de petits générateurs comme ceux qui sont décrits dans l'exemple ci-dessus. Dans l'industrie, on aura besoin de générateurs plus grands que ceux qui sont décrits ci-dessus. Toutes les industries alimentaires, notamment, sont concernées, ainsi que les moyens de transport des produits et les locaux de stockage.

## Revendications

1. Procédé de génération d'un gaz toxique de fumigation pour la lutte antiparasitaire, l'acide cyanhydrique HCN, puis de traitement automatique des résidus par mise en contact dans un générateur (5) de deux réactifs chimiques liquides (9, 16) au moins et de deux réactifs chimiques solides au moins, permettant d'une part d'augmenter la sécurité au transport et au stockage en isolant le réactif chimique solide dangereux pour le rendre impossible à ingérer accidentellement par les personnes et en le mettant à l'abri de l'arrivée accidentelle d'un réactif chimique acide susceptible de réagir avec lui en générant le gaz HCN et d'autre part de garantir le déroulement dans le bon ordre, lors de la mise en oeuvre, des réactions successives de production du gaz HCN puis de traitement automatique des résidus par leur neutralisation et par l'élimination des éléments toxiques qu'ils contiennent, **caractérisé en ce que** l'on fige les réactifs chimiques solides en étages superposés (2, 3) rigides et adhérents entre eux ainsi qu'aux parois et au fond du générateur (5) dans lequel ils sont transportés et stockés, en les mélangeant lors de la fabrication à un produit de maintien non réactif chimiquement et dur aux températures rencontrées pendant le transport et le stockage.

2. Procédé selon la revendication 1 dans lequel la chaleur produite par la succession des réactions exothermiques de production du gaz HCN puis de traitement automatique des résidus joue un rôle déterminant dans l'accomplissement du processus, **caractérisé en ce que** le réactif chimique solide destiné à la production du gaz HCN contenu dans l'étage supérieur (2) consiste en un sel de cyanure en granulés comme le cyanure de sodium et que le réactif chimique solide destiné au traitement automatique des résidus contenu dans l'étage inférieur (3) consiste en un produit alcalin en granulés comme le carbonate de sodium.

3. Procédé selon les revendications 1 et 2 **caractérisé en ce que** le produit de maintien consiste en une matière soluble dans un solvant ou fusible par la chaleur comme la paraffine.

4. Procédé selon les revendications 1, 2 et 3 dans lequel la chaleur produite par le mélange extemporané des réactifs chimiques liquides (9, 16) au moment de la mise en oeuvre joue un rôle déterminant dans le déclenchement du processus, **caractérisé en ce que** le premier réactif chimique liquide (9) consiste en un acide fort comme l'acide sulfurique concentré et que le deuxième réactif chimique liquide (16) consiste en eau.

5. Procédé selon l'une quelconque des revendications précédentes pour éliminer une proportion importante des cyanures en solution dans les résidus de la première réaction de production du gaz HCN par entraînement gazeux au cours de la deuxième réaction de traitement automatique des résidus, **caractérisé en ce que** le premier réactif chimique liquide (9) est en très large excès par rapport à la quantité nécessaire pour la réaction avec le réactif chimique solide contenu dans l'étage 2 et que le réactif chimique solide contenu dans l'étage 3 est lui-même en léger excès par rapport au premier réactif chimique liquide (9).

6. Dispositif pour la mise en oeuvre du procédé selon l'une quelconque des revendications précédentes **caractérisé en ce qu'**il est constitué d'un générateur (5) dont le fond est garni d'une superposition (1, 2, 3) de réactifs chimiques solides mélangés à un produit de maintien, superposition surmontée d'un premier réactif chimique liquide (16), ledit générateur étant surmonté d'un contenant 8 renfermant un deuxième réactif chimique liquide (9), ledit contenant étant installé au-dessus du générateur (5) sur un couvercle spécial (13), son coude d'écoulement étant dirigé vers le fond du générateur (5) et obturé par un robinet (11).

7. Dispositif selon la revendication 6 **caractérisé en ce que** le produit de maintien constitue à lui seul un étage (1) superposé aux autres étages (2, 3), sa fonction étant de renforcer l'isolement du réactif chimique dangereux contenu dans l'étage sous-jacent (2) et d'introduire au moment de la mise en oeuvre un délai avant le début de la réaction de production du gaz HCN, de sorte que les opérateurs aient le temps de quitter le local de traitement avant l'arrivée du gaz HCN.

8. Dispositif selon la revendication 6 dans lequel le cyanure encore en solution en faible quantité dans les résidus après la dernière réaction de neutralisation entre l'excès d'acide et le réactif chimique alcalin contenu dans l'étage 3 est détruit par un agent oxydant, **caractérisé en ce qu'**un étage inférieur (4) non figuré et situé sous les autres étages (1, 2, 3) est constitué du mélange du produit de maintien avec un réactif chimique oxydant.

9. Dispositif selon les revendications 6, 7 et 8, **caractérisé en ce que** les étages supérieurs (1, 2) sont fabriqués avec de la paraffine à haute température de fusion tandis que les étages inférieurs (3, 4) sont fabriqués avec de la paraffine à basse température de fusion.

## Patentansprüche

1. Verfahren zur Erzeugung eines toxischen Vernebelungsgases zur Schädlingsbekämpfung, Blausäure HCN, und zur automatischen Aufbereitung von Rückständen durch in Kontakt Bringen, in einem Generator (5), von mindestens zwei flüssigen chemischen Reagenzien (9, 16) und mindestens zwei festen chemischen Reagenzien, was einerseits die Sicherheit bei Transport und Lagerung erhöht, indem das gefährliche feste chemische Reagenz isoliert wird, um zu verhindern, dass es versehentlich durch Personen absorbiert werden kann, und indem es vor dem versehentlichen Eintreten eines säurehaltigen chemischen Reagenzes geschützt wird, welches mit ihm eine chemische Reaktion auslösen und so das HCN Gas erzeugen könnte, und andererseits zur Gewährleistung der Abwicklung in der richtigen Reihenfolge, beim Einsatz, der aufeinanderfolgenden chemischen Reaktionen zur Erzeugung des Gases HCN und der anschließenden automatischen Aufbereitung der Rückstände durch Neutralisierung und Eliminierung der toxischen Bestandteile, die diese enthalten, **dadurch gekennzeichnet, dass** man die festen chemischen Reagenzien in mehreren Etagen übereinander (2, 3) zum Erstarren bringt, wobei diese Etagen steif sind und aneinander sowie an den Wänden und am Boden des Generators (5) haften, in welchem sie befördert und gelagert werden, indem man sie bei der Herstellung mit einem chemisch nicht reagierenden, haltgebenden Produkt vermengt, welches bei den im Transport und bei der Lagerung angetroffenen Temperaturen hart ist.

2. Verfahren gemäß Anspruch 1, bei welchem die durch die Abfolge der exothermen Reaktionen der HCN Gasproduktion und bei der automatischen Aufbereitung der Rückstände erzeugte Wärme eine maßgebliche Rolle bei der Bewerkstelligung des erfindungsgemäßen Verfahrens spielt, **dadurch gekennzeichnet, dass** das in der oberen Etage (2) enthaltene, zur Produktion von HCN Gas bestimmte feste chemische Reagenz aus einem granulatförmigen Zyanidsalz wie Natriumzyanit besteht, und das in der unteren Etage (3) enthaltene, für die automatische Rückstandsaufbereitung bestimmte feste chemische Reagenz aus seinem granulatförmigen alkalischen Produkt wie Natriumkarbonat in einem Verhältnis von 0,5 bis 4 Gewichtseinheiten zu 1 Gewichtseinheit Zyanidsalz besteht.

3. Verfahren gemäß Ansprüchen 1 und 2, **dadurch gekennzeichnet, dass** das haltgebende Produkt aus einem lösemittellöslichen oder aus einem bei Hitze schmelzenden Material wie Paraffin in einem Verhältnis von 1 bis 4 Gewichtseinheiten zu 1 Gewichtseinheit Zyanidsalz besteht.

4. Verfahren gemäß den Ansprüchen 1 und 4, bei dem die durch die zum Bedarfszeitpunkt herbeigeführte Mischung der flüssigen chemischen Reagenzien (9, 16) zum Zeitpunkt des Einsatzes eine maßgebliche Rolle beim Auslösen des erfindungsgemäßen Prozesses spielt, **dadurch gekennzeichnet, dass** das erste flüssige chemische Reagenz (9) aus einer starken Säure wie Schwefelsäure in einem Konzentrationsverhältnis von 2 bis 4 Gewichtseinheiten zu 1 Gewichtseinheit Zyanidsalz besteht, und das zweite flüssige chemische Reagenz (16) aus Wasser in einem Verhältnis von 2 bis 10 Gewichtseinheiten zu 1 Gewichtseinheit Zyanidsalz besteht.

5. Verfahren gemäß eines beliebigen der obigen Ansprüche zur Eliminierung eines bedeutenden Anteils der in den Rückständen der ersten Reaktion zur HCN Gasproduktion gelösten Zyanide, durch das Mitführen in Gas im Zuge der zweiten Reaktion zur automatischen Rückstandsaufbereitung, **dadurch gekennzeichnet, dass** das erste flüssige chemische Reagenz (9) in großem Übermaß gegenüber der für die Reaktion mit dem in Etage 2 enthaltenen festen chemischen Reagenz benötigten Menge vorhanden ist, und dass das in Etage 3 enthaltene feste chemische Reagenz seinerseits in leichtem Übermaß gegenüber dem ersten flüssigen chemischen Reagenz (9) vorhanden ist.

6. Vorrichtung für den Einsatz des Verfahrens gemäß eines beliebigen der obigen Ansprüche, **dadurch gekennzeichnet, dass** sie aus einem Generator (5) gebildet wird, dessen Boden mit einer Schichtung (1, 2, 3) von mit einem haltgebenden Mittel vermischten festen chemischen Reagenzien versehen ist, wobei sich oberhalb dieser Schichtung ein erstes flüssiges chemisches Reagenz (16) befindet, und sich oberhalb besagten Generators ein Behältnis 8 befindet, das ein zweites flüssiges Reagenz (9) enthält, wobei besagtes Behältnis oberhalb des Generators (5) auf einem Spezialdeckel (13) installiert ist, dessen Ablaufrohrbogen auf den Grund des Generators (5) gerichtet und mit einem Hahn (11) verschlossen ist.

7. Vorrichtung gemäß den Ansprüchen 1 und 7, **dadurch gekennzeichnet, dass** das haltgebende Produkt allein eine Etage (1) bildet, die sich oberhalb der restlichen Etagen (2, 3) befindet, wobei dessen Funktion darin besteht, die Isolierung des in der darunterliegenden Etage (2) befindlichen gefährlichen chemischen Reagenzes zu verstärken, und zum Zeitpunkt des Einsatzes eine Verzögerung vor dem Beginn der Reaktion zur Produktion des HCN Gases zu hervorzurufen, so dass die Bediener Zeit erhalten, den Aufbereitungsraum vor dem Eintreten des HCN Gases zu verlassen.

8. Vorrichtung gemäß eines beliebigen der obigen Ansprüche, bei welcher das noch in geringer Menge in den Rückständen der letzten Reaktion zur Neutralisierung zwischen dem Säureüberhang und dem in Etage 3 enthaltenen alkalischen chemischen Reagenz gelöste Zyanid durch ein Oxidationsmittel vernichtet wird, **dadurch gekennzeichnet, dass** eine nicht abgebildete, unterhalb der anderen Etagen (1, 2, 3) befindliche untere Etage (4) aus dem Gemisch eines haltgebenden Produkts mit einem granulatförmigen oxidierenden chemischen Reagenz wie Kalziumhypochlorit in einem Verhältnis von 0,1 bis 0,3 Gewichtseinheiten zu 1 Gewichtseinheit Zyanidsalz besteht.

9. Vorrichtung gemäß den Ansprüchen 1, 2, 3, 6, 7, 8, **dadurch gekennzeichnet, dass** die oberen Etagen (1, 2) mit Paraffin mit hoher Schmelztemperatur hergestellt werden, wohingegen die unteren Etagen (3, 4) mit Paraffin mit niedriger Schmelztemperatur hergestellt werden.

## Claims

1. Method for generation of a toxic fumigation gas for pest control, hydrocyanic acid HCN, and automatic treatment of the residues by bringing into contact within a generator (5) at least two liquid chemical reagents (9, 16) and at least two solid chemical reagents, which will, on the one hand, increase the safety of transport and storage by isolating the dangerous solid chemical reagent to prevent it from being accidentally ingested by people and by protecting it from the accidental arrival of an acid chemical reagent capable of reacting with it to generate HCN gas, and, on the other hand, guarantee the proper development, at the time of use, of the successive reactions of production of the HCN gas and of automatic treatment of the residues by their neutralization and by the elimination of the toxic elements which they contain, **characterized in that** the solid chemical reagents are fixed in stacked rigid stages (2, 3) which adhere to each other as well as to the walls and the bottom of the generator (5) in which they are transported and stored, by mixing them at the time of fabrication with a chemically inert retention product which is hard at the temperatures encountered during transport and storage.

2. Method according to claim 1 in which the heat produced by the succession of exothermic reactions of production of the HCN gas and automatic treatment of the residues plays a determinig role in the accomplishment of the process, **characterized in that** the solid chemical reagents intended for the production of HCN gas contained in the upper stage (2) consists of a granulated cyanide salt such as sodium cyanide and **in that** the solid chemical reagent for the automatic treatment of the residues contained in the lower stage (3) consists of a granulated alkaline product such as sodium carbonate.

3. Method according to claims 1 and 2, **characterized in that** the retention product consists of a substance that is soluble in a solvent or meltable by heat such as paraffin.

4. Method according to claims 1, 2 and 3 wherein the heat produced by the extemporaneous mixture of the liquid chemical reagents (9, 16) at the time of use plays a determinig role in triggering the process, **characterized in that** the first liquid chemical reagent (9) is a strong acid such as concentrated sulphuric acid and the second liquid chemical reagent (16) is water.

5. Method according to any one of the preceding claims to eliminate a large proportion of the cyanides in solution in the residues of the first reaction of production of HCN gas by gaseous entrainment during the second reaction of automatic treatment of the residues, **characterized in that** the first liquid chemical reagent (9) is in great excess relative to the quantity necessary for the reaction with the solid reagent contained in stage 2 and that the solid chemical reagent contained in stage 3 is itself in slight excess relative to the first chemical reagent (9).

6. Device for implementation of the method according to any one of the preceding claims, **characterized in that** it consists of a generator (5) whose bottom is lined with a stack (1, 2, 3) of solid chemical reagents mixed with a retention product, this stack being topped by a second liquid chemical reagent (16), with the said generator topped by a container (8) holding a first liquid chemical reagent (9), this container being installed above the generator (5) on a special cover (13), with its flow elbow directed toward the bottom of the generator (5) and sealed by a valve (11).

7. Device according to claim 6, **characterized in that** the retention product itself alone constitues one stage (1) stacked on the other stages (2, 3), its function being to reinforce the isolation of the dangerous chemical reagent contained in the subjacent stage (2) and to introduce at the time of use a delay before the beginning of the reaction of production of HCN gas, such that the operators have time to leave the treatment site before the arrival of the HCN gas.

8. Device according to claim 6, wherein the cyanide still in solution in small quantity in the residues after the final reaction of neutralization between the excess of acid and the alkaline chemical reagent contained in stage 3 is destroyed by an oxidizing agent, **characterized in that** a lower stage (4) not depicted and located below the other stages (1, 2, 3) is made up of the mixture of the retention product with an oxidizing chemical reagent.

9. Device according to claims 6, 7 and 8, **characterized in that** the upper stages (1, 2) are fabricated with paraffin with a high melting point whereas the lower stages (3, 4) are fabricated with paraffin with a low melting point.
